(19) Europäisches Patentamt
European Patent Office
Office européen des brevets

(11) **EP 1 064 717 B1**

(12) **EUROPÄISCHE PATENTSCHRIFT**

(45) Veröffentlichungstag und Bekanntmachung des Hinweises auf die Patenterteilung:
**26.11.2008 Patentblatt 2008/48**

(21) Anmeldenummer: **99907274.7**

(22) Anmeldetag: **25.01.1999**

(51) Int Cl.:
*H02P 6/06* (2006.01)     *H02P 7/28* (2006.01)

(86) Internationale Anmeldenummer:
**PCT/DE1999/000174**

(87) Internationale Veröffentlichungsnummer:
**WO 1999/043078 (26.08.1999 Gazette 1999/34)**

(54) **VERFAHREN UND SCHALTUNGSANORDNUNG ZUR DREHZAHLERFASSUNG VON ELEKTRONISCH KOMMUTIERTEN LÜFTERN**

METHOD AND CIRCUIT FOR MEASURING THE ROTATION SPEED OF ELECTRONICALLY SWITCHED FANS

PROCEDE ET CIRCUIT POUR MESURER LA VITESSE DE ROTATION DE SOUFFLANTES A COMMUTATION ELECTRONIQUE

(84) Benannte Vertragsstaaten:
**FR GB IE IT NL**

(30) Priorität: **20.02.1998 DE 19807253**

(43) Veröffentlichungstag der Anmeldung:
**03.01.2001 Patentblatt 2001/01**

(73) Patentinhaber: **Fujitsu Siemens Computers GmbH 80807 München (DE)**

(72) Erfinder: **BUSCH, Peter D-86179 Augsburg (DE)**

(74) Vertreter: **Epping - Hermann - Fischer Patentanwaltsgesellschaft mbH Ridlerstraße 55 80339 München (DE)**

(56) Entgegenhaltungen:
**DE-A- 2 617 131**

- **H. SAX: "Tachoregelung ohne Tachogenerator" ELEKTRONIK, Bd. 33, Nr. 16, August 1984, Seiten 40-44, XP002105032 DE**

**Beschreibung**

Die Erfindung betrifft ein Verfahren und eine Schaltungsanordnung zur Drehzahlerfassung von elektronisch kommutierten Lüftern gemäß den Oberbegriffen der Ansprüche 1 und 5.

Netzteile höherer Leistung brauchen zu ihrer Kühlung elektronisch kommutierte Lüfter. Elektronisch kommutierte Lüfter verursachen auf ihren Stromversorgungsleitungen Stromschwankungen, die von Lüfter zu Lüfter und nicht nur von Lüftertyp zu Lüftertyp variieren. Zur Kontrolle und zum Regeln der Lüfter ist es notwendig, die Drehzahl der Lüfter elektronisch zu erfassen, um daraus ein Taktsignal mit einer pro Zeiteinheit entsprechenden Anzahl von Taktimpulsen abzuleiten.

Bekannt ist, Speziallüfter zu verwenden, die ein internes Taktsignal der elektronischen Kommutierung über eine zusätzliche Leitung als ein oben angesprochenes Taktsignal nach außen führen (Papst-Katalog Gerätelüfter Equipment Fans, 94/95, Fa. Papst-Motoren GmbH & Co KG, Karl-Maier-Straße 1, D-78112 St.Georgen/Schwarzwald, Postfach 1435, Kapitel "Gerätelüfter für Gleichspannung" und "Varianten"). Nachteilig ist, dass solche Speziallüfter teuer sind.

Es ist daneben bekannt, die von einem Lüfter verursachten Stromschwankungen über einen Strommesswiderstand zu erfassen, über einen Hochpass auszufiltern und anschließend einem Impulsformer zur Formung der Taktimpulse des oben angesprochenen Taktsignals zuzuführen (DE 26 17 131 C3). Nachteilig ist, dass die Höhe und die Form der vom Lüfter verursachten Stromschwankungen auf ihren Stromversorgungsleitungen von Lüfter zu Lüfter so ausgeprägt unterschiedlich sind, dass eine jeweilige Anpassung an einen Lüfter notwendig ist.

Außerdem ist aus DE 196 01 040 A1 ein Verfahren und eine Schaltungsanordnung zur Drehzahlerfassung von elektronisch kommutierten Lüfern, deren Drehzahl durch ein Taktsignal mit einer pro Zeiteinheit entsprechenden Anzahl von Taktimpulsen angezeigt wird, und ist aus der DE-Firmenschrift: "Motor Control Seminar 1986", Seite E15, SGS Halbleiter Bauelemente GmbH, April 1986 bekannt, aus maximalen Stromsteilheiten von durch Lüftern auf den Stromversorgungsleitungen in Abhängigkeit von der Drehzahl verursachten Stromschwankungen zu messen und daraus Taktsignale für eine Drehzahlinformation abzuleiten.

Aufgabe der vorliegenden Erfindung ist es deshalb, ein Verfahren und eine Schaltungsanordnung der eingangs genannten Art anzugeben, durch die die Drehzahlerfassung von elektronisch kommutierten Lüftern kostengünstig und in einfacher Weise durchführbar ist.

Diese Aufgabe wird erfindungsgemäß durch ein Verfahren gelöst, das die im Anspruch 1 angegebenen Verfahrensschritte aufweist. Diese Aufgabe wird erfindungsgemäß auch durch eine Schaltungsanordnung gelöst, die die im Anspruch 5 angegebenen Merkmale aufweist.

Mit dem Verfahren bzw. der Schaltungsanordnung erübrigen sich teure Speziallüfter, so dass die Drehzahlerfassung kostengünstig durchgeführt werden kann. Es erübrigt sich darüberhinaus die jeweiligen Anpassungsmaßnahmen an einen verwendeten Lüfter, so dass die Drehzahlerfassung ebenso in einfacher Weise durchgeführt werden kann. Es können sogenannte Normallüfter aller Art verwendet werden. Die Anpassung an einen jeweiligen Lüfter erfolgt automatisch.

Vorteilhafte Ausgestaltungen der Erfindung sind Gegenstand von Unteransprüchen.

Empirische Messungen an einer Vielzahl unterschiedlicher Lüfter und Lüftertypen haben gezeigt, dass die von ihnen auf ihren Stromversorgungsleitungen verursachten Stromschwankungen in der Regel mit wesentlich stärkeren negativen als positiven Stromsteilheiten auftreten. Die Drehzahlerfassung basierend auf den negativen Stromsteilheiten der Stromschwankungen ermöglichen daher genauere Ergebnisse. Aber auch bei den relativ wenigen Lüftern bzw. Lüftertypen, bei denen die positiven Stromsteilheiten gegenüber den negativen Stromsteilheiten stärker ausgeprägt sind, sind die negativen Stromsteilheiten aber immer noch zumindest so stark ausgeprägt, dass stets eine sichere und genaue Erfassung der Drehzahl der Lüfter zu gewährleisten ist. In einer vorteilhaften Ausgestaltung der Erfindung werden daher die negativen Stromsteilheiten der von einem Lüfter auf seinen Stromversorgungsleitungen verursachten Stromschwankungen zur Drehzahlauswertung herangezogen.

In einer weiteren vorteilhaften Ausgestaltung der Erfindung wird nicht nur der Verstärkungsbereich und die Schaltschwelle eines Komparators, sondern auch die ermittelten maximalen negativen Stromsteilheiten in einem entsprechenden Verhältnis angepasst, wodurch erreicht wird, dass die Vorkehr zur Drehzahlerfassung sofort wieder einen eingeschwungenen Zustand einnimmt.

Bei einer anderen vorteilhaften Ausgestaltung der Erfindung erfolgt die automatische Anpassung in diskreten Schritten. Der Realisierungsaufwand ist dadurch geringer als bei einer kontinuierlichen Anpassung.

Die vorgenannten Überlegungen treffen dabei sowohl auf das Verfahren, als auch auf die Schaltungsanordnung zu.

Nachfolgend wird ein Ausführungsbeispiel der Erfindung anhand einer Zeichnung näher erläutert. Darin zeigen

Figur 1    eine Schaltungsanordnung zur Drehzahlerfassung von elektronisch kommutierten Lüftern gemäß der Erfindung in Prinzipdarstellung, und

Figur 2    ein Diagramm von von einem Lüfter auf seinen Strom- versorgungsleitungen verursachten Stromschwankungen als Ausgangspunkt für eine Drehzahlerfassung mittels einer Schaltungsanordnung gemäß der Figur 1.

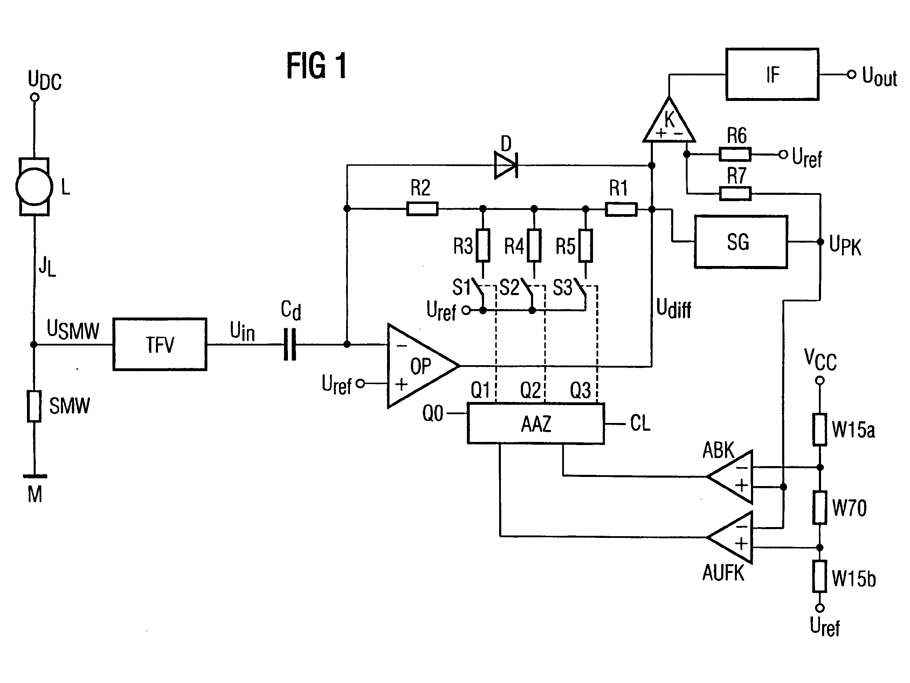

In einem Leistungspfad der Figur 1, der zwischen einem Stromversorgungspunkt $U_{DC}$ und einem Massebezugspunkt M geschaltet ist, sind in Serie ein elektronisch kommutierter Lüfter L, nachfolgend auch nur Lüfter L genannt, und ein Strommesswiderstand SMW angeordnet. Der Pfad umfasst die dem Lüfter L zugehörigen Stromversorgungsleitungen, auf denen der Lüfterstrom $I_L$ fließt.

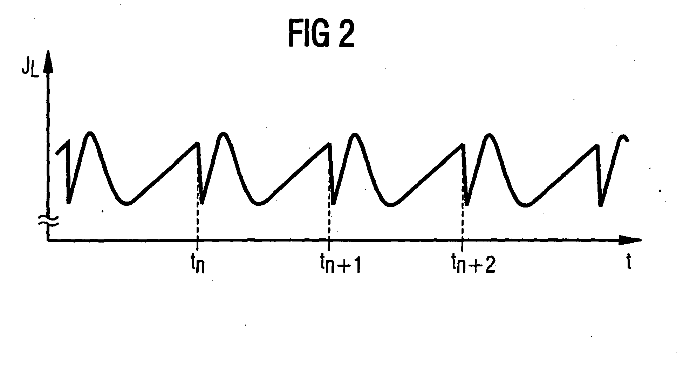

Aufgrund der elektronischen Kommutierung des Lüfters L weist der Lüfterstrom $I_L$ Schwankungen auf, die in der Figur 2 in einem Diagramm qualitativ dargestellt sind. Das Diagramm ist in der Weise zu lesen, dass der Lüfterstrom einen über einen längeren Zeitraum im wesentlichen konstanten Gleichanteil aufweist, der von den sehr schnellen Stromschwankungen überlagert ist. Die Stromschwankungen werden durch die Kommutierung der Motorwicklungen des Lüfters hervorgerufen. Stellvertretend für die sich wiederholenden Zeitpunkte der Kommutierung sind in der Figur 2 die Zeitpunkte $t_n$, $t_{n+1}$ und $t_{n+2}$ näher gekennzeichnet. Zu diesen Zeitpunkten findet eine Kommutierung statt, wodurch der Lüfterstrom zunächst sehr rasch und stark abnimmt. Anschließend steigt er in einer etwas flacheren Kurve wieder an und erfährt sogar einen Überschwinger. Im weiteren Verlauf nimmt der Lüfterstrom erneut ab, aber in einem längeren Zeitraum. Schließlich steigt er wieder in einem noch längeren Zeitraum an, bis dann die nächste Kommutierung erfolgt und sich die Vorgänge wiederholen.

Die Abstände zwischen den einzelnen Zeitpunkten der Kommutierung, beispielsweise der Zeitpunkte $t_n$, $t_{n+1}$ und $t_{n+2}$, hängt dabei direkt von der augenblicklich gültigen Drehzahl des Lüfters ab. Je schneller der Lüfter dreht, um so kürzer sind die Abstände bzw. je mehr solcher Zeitpunkte treten pro Zeiteinheit auf. Außerdem verändern sich die Stromsteilheiten der Stromschwankungen.

Die Kurvenverläufe und die Anzahl der Kommutierungszeitpunkte pro Zeiteinheit hängen auch vom Aufbau der Motorwicklung des Lüfters ab. Manche Lüftermotore weisen mehr, andere weniger Pole auf. Jede Motorwicklung muss während einer Umdrehung je nach Ausführung ein- oder mehrmals kommutiert werden, so dass die Anzahl von Kommutierungszeitpunkten je Umdrehung unabhängig von der Drehzahl des Lüftermotors auch von der Pol- und Wicklungszahl des Lüftermotors abhängt. Es gibt aber zwischen zwei Kommutierungszeitpunkten immer einen abgegrenzten Zeitbereich, der mindestens einen zur Genüge ausgeprägten negativen Stromabfall mit einer örtlich maximalen Stromsteilheit aufweist.

Durch den Strommesswiderstand SMW ist es möglich, an einem Punkt zwischen dem Strommesswiderstand SMW und dem Lüfter L eine Strommesswiderstandsspannung $U_{SMW}$ abzugreifen, die die in Figur 2 dargestellten Vorgänge als Spannung darstellen. Diese Spannung wird von einem Tiefpassfilter und Verstärker TFV abgegriffen und als eine Eingangsspannung $U_{in}$ über einen Eingangskondensator $C_d$ an eine nachfolgend näher erklärte Drehzahlerfassungsschaltung weitergeleitet.

Die Drehzahlerfassungsschaltung weist einen Operationsverstärker OP mit einem Minus- und einem Pluseingang auf. Am Pluseingang ist eine Referenzspannung $U_{ref}$ angeschlossen, während am Minuseingang die über den Eingangskondensator $C_d$ geleitete Eingangsspannung $U_{in}$ anliegt.

Der Ausgang und der Minuseingang des Operationsverstärkers OP sind auf zwei parallelen Wegen verbunden. In dem einen Weg ist eine Serienschaltung bestehend aus zwei Widerständen R1 und R2 angeordnet. In dem anderen Weg ist eine Diode D angeordnet, die in der Weise gepolt ist, dass sie vom Minuseingang zum Ausgang jeweils des Operationsverstärkers OP in Durchlassrichtung geschaltet ist.

Der Ausgang des Operationsverstärkers OP ist einerseits mit einem Pluseingang eines Komparators K und andererseits mit einem Eingang eines Spitzenwertgleichrichters SG verbunden. Ein Ausgang des Spitzenwertgleichrichters SG ist weiter über einen Widerstand R7 mit einem Minuseingang des Komparators K und mit einem Pluseingang eines Abwärtskomparators ABK sowie mit einem Minuseingang eines Aufwärtskomparators AUFK verbunden.

Der Abwärtskomparator ABK und der Aufwärtskomparator AUFK ist in der Weise mit einer Serienschaltung bestehend aus drei Widerständen W15a, W70 und W15b verbunden, dass ein Minuseingang des Abwärtskomparators ABK zwischen den Widerständen W15a und W70 und ein Pluseingang des Aufwärtskomparators AUFK zwischen den Widerständen W70 und W15b angeschlossen ist.

Die aus den drei Widerständen W15a, W70 und W15b bestehende Serienschaltung ist an einem Ende an eine Versorgungsspannung $V_{cc}$ und an einem anderen Ende an die Referenzspannung $U_{ref}$ angeschlossen.

Der Minuseingang des Komparators K ist neben dem Widerstand R7 mit einem Widerstand R6 verbunden, an den die Referenzspannung $U_{ref}$ angeschlossen ist. Ein Ausgang des Komparators K ist mit einem Impulsformer IF verbunden, an dessen Ausgang eine Ausgangsspannung $U_{out}$ abgegriffen werden kann.

Jeweils ein Ausgang des Abwärtskomparators ABK und des Aufwärtskomparators AUFK ist mit einem Eingang eines Auf /Abwärtszählers AAZ verbunden. Der Auf-/Abwärtszähler AAZ weist vier Zählausgänge Q0, Q1, Q2 und Q3 auf, von denen die drei höherwertigen mit einem jeweiligen Schalter S1, S2 und S3 zu deren Steuerung verbunden sind.

Die auf einen Punkt zwischen den Widerständen R1 und R2 geschalteten Schalter S1, S2 und S3 teilen über R1 und jeweilige Widerstände R3, R4 und R5 die Ausgangsspannung $U_{diff}$ des Operationsverstärkers OP bezogen auf die Referenzspannung $U_{ref}$ entsprechend ihrer Werte herunter.

Der Operationsverstärker OP erzeugt eine Ausgangsspannung $U_{diff}$, deren Spitzenwert von dem Spitzenwertgleichrichter SG zu einer Ausgangsspitzenspannung $U_{PK}$ umgewandelt wird.

Der Lüfterstrom $I_L$ wird mit dem Strommesswiderstand SMW erfasst. Im Tiefpassfilter und Verstärker TFV werden hochfrequente Störungen auf den Stromversorgungsleitungen des Lüfters L beseitigt, ohne die Stromschwankungen des Lüfters L auszufiltern. Beispielsweise kann die zu filternde Grenzfrequenz bei 10 kHz festgelegt sein.

Nach dem Tiefpassfilter und Verstärker TFV wird die negative Stromsteilheit des Lüfterstroms $I_L$ mit dem Eingangskondensator $C_d$, dem Operationsverstärker OP und den Widerständen R1 und R2 erfasst. Mit der Summe R=R1+R2 der Einzelwiderstände R1 und R2, sowie mit ausgeschalteten Schaltern S1, S2 und S3 ergibt sich allgemein eine Ausgangsspannung $U_{diff}$ gemäß der Beziehung:

$$U_{diff} = (-R*C_d * dU_{in}/dt)$$

Der Spitzenwert der Ausgangsspannung $U_{diff}$ wird danach als Ausgangsspitzenspannung $U_{PK}$ erfasst und ein fest eingestellter Anteil davon dem Komparator K als Vergleichswert vorgegeben. Durch Vergleich mit der Ausgangsspannung $U_{diff}$ werden nun die höchsten periodisch wiederkehrenden Stromsteilheiten zu einem Ausgangsimpuls führen. Die Summe der Ausgangsimpulse können als Taktsignal, die einzelnen Ausgangsimpulse als Taktimpuls aufgefasst werden.

Wie eingangs erwähnt, sind die Stromsteilheiten der einzelnen Lüfter untereinander sehr unterschiedlich. Sie können im Extremfall um den Faktor 1000 variieren. Bei einem Lüfter mit niedriger Stromsteilheit wird die Ausgangsspitzenspannung $U_{PK}$ sehr niedrig sein. Beispielsweise kann sie kleiner als 15% der Differenz aus der Versorgungsspannung $V_{cc}$ und der Referenzspannung $U_{ref}$ sein. Die Ausgangsspitzenspannung $U_{PK}$ hat aber einen intern fest eingestellten Minimalwert, der um mindestens einen positiven Störpegel auf der Ausgangsspannung $U_{diff}$ bezogen auf die Referenzspannung $U_{ref}$ oberhalb der Referenzspannung $U_{ref}$ liegt.

Der Auf-/Abwärtszähler AAZ zählt nun um 1 aufwärts, das heißt, er schaltet von seinem Zählausgang Q0 auf seinen Zählausgang Q1. Der Schalter S1 schaltet ein. Damit entsteht aus den Widerständen R1 und R3 ein Teiler. Es wird nur noch ein Teil der Ausgangsspannung $U_{diff}$ auf den Widerstand R2 geschaltet. Dies erhöht die Gesamtverstärkung des um den Operationsverstärker OP herum als Differentiator wirkenden Schaltungsteils. Mit ratio = Spannungsteilerverhältnis aus den Widerständen R2 und R3 (parallel) und R1 im Eingang des Operationsverstärkers OP ergibt sich folgende Verstärkung der Eingangssteilheit:

$$U_{diff} = (-R2*C_d * dU_{in}/dt * 1/ratio).$$

Die Erhöhung der Verstärkung wird nun kleiner gewählt als das Verhältnis der Schaltschwellen für die Auf-/Abwärts-Komparatoren ABK, AUFK. Dies verhindert ein andauerndes Hin- und Herschalten.

Im Ausführungsbeispiel könnte der Faktor 4 gewählt sein. Zum gleichen Zeitpunkt wird die Ausgangsspitzenspannung $U_{PK}$ des Spitzenwertgleichrichters SG um den gleichen Faktor erhöht, um sofort wieder einen eingeschwungenen Zustand zu erhalten.

Wenn die Verstärkung noch nicht ausreichend ist, wird nach einer vorgegebenen Einschwingzeit der nächste Schalter S2, und eventuell danach zusätzlich noch der weitere Schalter S3 eingeschaltet. Gleichzeitig wird wieder die Ausgangsspitzenspannung $U_{PK}$ an die neuen Verstärkungsverhältnisse angepasst. Der als Differentiator wirkende Schaltungsteil arbeitet nun in einem optimalen Arbeitsbereich.

Wenn z.B. durch eine Betriebsspannungserhöhung am Lüfter L die Stromsteilheiten zunehmen und die Ausgangsspitzenspannung $U_{PK}$ sehr hoch wird, z.B. größer 85% der Differenz aus der Versorgungsspannung $V_{cc}$ und der Referenzspannung $U_{ref}$, wird der Abwärtskomparator ABK durchschalten. Der Auf-/Abwärtszählers AAZ zählt um 1 abwärts, also z.B. von seinem Zählausgang Q3 auf seinen Zählausgang Q2. Dadurch wird die Gesamtverstärkung reduziert und die Ausgangsspannung $U_{diff}$ befindet sich wieder im optimalen Arbeitsbereich. Gleichzeitig wird wieder die Ausgangsspitzenspannung $U_{PK}$ an die neuen Verstärkungsverhältnisse angepasst. Die Ausgangsspannung $U_{diff}$ kann insgesamt wieder vom Komparator K in der richtigen Weise erfasst werden.

Die Verstärkungsfaktoren sind jeweils gleichmäßig untereinander abgestuft. Im Ausführungsbeispiel stoppt der Auf-/Abwärtszählers AAZ beim aufwärts Zählen spätestens dann, wenn der Zählausgang Q3 aktiviert ist. Er stoppt beim abwärts Zählen dann, wenn der Zählausgang Q0 aktiviert ist.

Die Diode D stellt für positive Stromsteilheiten eine sehr niedrige Verstärkung ein.

Der Impulsformer IF unterdrückt Doppelimpulse beispielsweise bei unsauberen Kommutierungsimpulsen des Lüfters L.

Die Erhöhung bzw. Erniedrigung der Ausgangsspitzenspannung $U_{PK}$ ist besonders einfach, wenn der Spitzenwertgleichrichter SG seine Ausgangsspitzenspannung $U_{PK}$ digital in Form eines Zählerstandes speichert und der Einstellungsfaktor eine positive oder negative Potenz von 2, also z.B. 4 oder ¼, ist. In diesem Fall muss der Zählerstand nur um ein oder mehrere Bitstellen nach rechts oder links verschoben werden, um den Inhalt der neuen Verstärkung anzupassen.

Die beschriebene Methode der Drehzahlerfassung kann auch für Elektromotore verwendet werden, die eine ähnliche Motorstromcharakteristik aufweisen wie die Motore elektronisch kommutierter Lüfter.

## Patentansprüche

1. Verfahren zur Drehzahlerfassung von elektronisch kommutierten Lüftern (L), deren Drehzahl durch ein Taktsignal mit einer pro Zeiteinheit entsprechenden Anzahl von Taktimpulsen angezeigt wird, **dadurch gekennzeichnet, dass** maximale Stromsteilheiten von durch den Lüfter (L) auf seinen Stromversorgungsleitungen in Abhängigkeit von der Drehzahl verursachten Stromschwankungen gemessen werden, und dass abhängig vom Ergebnis der Messungen eine automatische Anpassung eines Verstärkungsbereichs und einer Schaltschwelle eines für einen die Taktimpulse des Taktsignals formenden Impulsformer (IF) als Vorschaltstufe dienenden Komparators (K) durchgeführt wird.

2. Verfahren nach Anspruch 1, **dadurch gekennzeichnet, dass** negative Stromsteilheiten bei den Messungen der Stromsteilheiten der durch den Lüfter (L) auf seinen Stromversorgungsleitungen verursachten Stromschwankungen gemessen werden.

3. Verfahren nach Anspruch 1 oder 2, **dadurch gekennzeichnet, dass** jeweils entsprechend der Anpassung des Verstärkungsbereichs und der Schaltschwelle des Komparators (K) eine jeweilige entsprechende Anpassung der gemessenen maximalen Stromsteilheiten der vom Lüfter (L) auf seinen Stromversorgungsleitungen verursachten Stromschwankungen durchgeführt wird.

4. Verfahren nach einem der vorherigen Ansprüche, **dadurch gekennzeichnet, dass** zumindest die automatische Anpassung des Verstärkungsbereichs und der Schaltschwelle des Komparators (K) in diskreten Schritten durchgeführt wird.

5. Schaltungsanordnung zur Drehzahlerfassung von elektronisch kommutierten Lüftern (L), mit Mitteln zur Erzeugung eines Taktsignals mit entsprechend der Drehzahl des Lüfters (L) pro Zeiteinheit einer entsprechenden Anzahl von Taktimpulsen, **dadurch gekennzeichnet, dass** Mittel zum Erfassen von maximalen Stromsteilheiten von durch den Lüfter (L) auf seinen Stromversorgungsleitungen verursachten Stromschwankungen vorgesehen sind, und dass Mittel zum automatischen Anpassen eines Verstärkungsbereiches und einer Schaltschwelle eines für einen die Taktimpulse des Taktsignals formenden Impulsformer als Vorschaltstufe dienenden Komparators (K) vorgesehen sind.

6. Schaltungsanordnung nach Anspruch 5, **dadurch gekennzeichnet, dass** die Mittel zum Erfassen von Stromsteilheiten für die Erfassung ausschließlich negativer Stromsteilheiten ausgelegt sind.

7. Schaltungsanordnung nach Anspruch 5 oder 6, **dadurch gekennzeichnet, dass** Mittel zur Anpassung der erfassten maximalen Stromsteilheiten entsprechend der Anpassung des Verstärkungsbereichs und der Schaltschwelle des Komparators (K) vorgesehen sind.

8. Schaltungsanordnung nach einem der Ansprüche 5 bis 7, **dadurch gekennzeichnet, dass** die Mittel zur Anpassung des Verstärkungsbereichs und der Schaltschwelle des Komparators (K) sowie zur entsprechenden Anpassung der erfassten maximalen Stromsteilheiten in der Weise ausgelegt sind, dass eine jeweilige Anpassung jeweils in wenigstens einem diskreten Schritt erfolgt.

## Claims

1. Method for detecting the rotation speed of electronically commutated fans (L) whose rotation speed is indicated by a clock signal having an appropriate number of clock pulses per unit time, **characterized in that** maximum current gradients of current fluctuations which are caused by the fan (L) on its power supply lines as a function of the rotation speed are measured, and **in that**, depending on the result of the measurements, automatic adaptation of an amplification range and switching threshold of a comparator (K) is carried out, with said comparator (K) being used as an input stage for a pulse former (IF) which forms the clock pulses of the clock signal.

2. Method according to Claim 1, **characterized in that** negative current gradients are measured during the measurements of the current gradients of the current fluctuations which are caused by the fan (L) on its power supply lines.

3. Method according to Claim 1 or 2, **characterized in that** an appropriate adaptation of the measured maximum current gradients of the current fluctuations which are caused by the fan (L) on its power supply lines is in each case carried out corresponding to the adaptation of the amplification range and the switching threshold of the comparator (K).

4. Method according to one of the preceding claims, **characterized in that** at least the automatic adaptation of the amplification range and of the switching threshold of the comparator (K) is carried out in discrete steps.

5. Circuit arrangement for detecting the rotation speed of electronically commutated fans (L), having means for producing a clock signal with a corresponding number of clock pulses per unit time corresponding to the rotation speed of the fan (L), **characterized in that** means are provided for detecting maximum current gradients of current fluctuations which are caused by the fan (L) on its power supply lines, and **in that** means are provided for automatic adaptation of an amplification range and of a switching threshold of a comparator (K) which is used as an input stage for a pulse former which forms the clock pulses of the clock signal.

6. Circuit arrangement according to Claim 5, **characterized in that** the means for detecting current gradients are designed for detection of exclusively negative current gradients.

7. Circuit arrangement according to Claim 5 or 6, **characterized in that** means are provided for adaptation of the detected maximum current gradients corresponding to the adaptation of the amplification range and of the switching threshold of the comparator (K).

8. Circuit arrangement according to one of Claims 5 to 7, **characterized in that** the means for adaptation of the amplification range and of the switching threshold of the comparator (K) and for corresponding adaptation of the detected maximum current gradients are designed in such a way that a respective adaptation is in each case carried out in at least one discrete step.

**Revendications**

1. Procédé d'acquisition de la vitesse de rotation de ventilateurs (L) à commutation électronique dont la vitesse de rotation est indiquée par un signal d'horloge qui présente un nombre correspondant d'impulsions d'horloge par unité de temps, **caractérisé en ce que** des pentes de courant maximales de fluctuations du courant provoquées par le ventilateur (L) sur ses lignes d'alimentation électrique en fonction de la vitesse de rotation sont mesurées et que, suivant le résultat des mesures, une adaptation automatique d'une plage d'amplification et d'un seuil de commutation d'un comparateur (K) servant d'étage amont pour un circuit de mise en forme d'impulsions (IF) formant les impulsions d'horloge du signal d'horloge est effectuée.

2. Procédé selon la revendication 1, **caractérisé en ce que** les pentes de courant négatives sont mesurées lors des mesures des pentes de courant des fluctuations du courant provoquées par le ventilateur (L) sur ses lignes d'alimentation électrique.

3. Procédé selon la revendication 1 ou 2, **caractérisé en ce qu'**une adaptation correspondante respective des pentes de courant maximales mesurées des fluctuations du courant provoquées par le ventilateur (L) sur ses lignes d'alimentation électrique est à chaque fois effectuée conformément à l'adaptation de la plage d'amplification et du seuil de commutation du comparateur (K).

4. Procédé selon l'une des revendications précédentes, **caractérisé en ce qu'**au moins l'adaptation automatique de la plage d'amplification et du seuil de commutation du comparateur (K) est effectuée en étapes discrètes.

5. Arrangement de circuit pour l'acquisition de la vitesse de rotation de ventilateurs (L) à commutation électronique, comprenant des moyens pour générer un signal d'horloge qui présente un nombre d'impulsions d'horloge par unité de temps correspondant à la vitesse de rotation du ventilateur (L), **caractérisé en ce que** des moyens sont prévus pour acquérir des pentes de courant maximales de fluctuations du courant provoquées par le ventilateur (L) sur ses lignes d'alimentation électrique et que des moyens sont prévus pour adapter automatiquement une plage d'amplification et un seuil de commutation d'un comparateur (K) servant d'étage amont pour un circuit de mise en forme d'impulsions formant les impulsions d'horloge du signal d'horloge.

6. Arrangement de circuit selon la revendication 5, **caractérisé en ce que** les moyens d'acquisition des pentes de courant sont conçus pour acquérir exclusivement les pentes de courant négatives.

7. Arrangement de circuit selon la revendication 5 ou 6, **caractérisé en ce que** des moyens sont prévus pour adapter les pentes de courant maximales acquises conformément à l'adaptation de la plage d'amplification et du seuil de commutation du comparateur (K).

8. Arrangement de circuit selon l'une des revendications 5 à 7, **caractérisé en ce que** les moyens d'adaptation de la plage d'amplification et du seuil de commutation du comparateur (K) et aussi d'adaptation en conséquence des pentes de courant maximales acquises sont conçus de telle sorte qu'une adaptation correspondante s'effectue à chaque fois en au moins une étape discrète.

# FIG 1

EP 1 064 717 B1

# FIG 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 2617131 C3
- DE 19601040 A1